# EUROPÄISCHE PATENTANMELDUNG

(11) **EP 3 936 368 A1**
(43) Veröffentlichungstag der Anmeldung: **12.01.2022**
(21) Anmeldenummer: 21183920.4
(22) Anmeldetag: 06.07.2021
(51) Int. Cl.: B60L 5/00, B60L 53/14, B60L 53/16

(54) **KOPPLUNGSSYSTEM UND KRAFTFAHRZEUG MIT KOPPLUNGSSYSTEM**

(30) Priorität: 06.07.2020 DE 102020208406
(71) Anmelder: Schlieben, Joerg, 38100 Braunschweig (DE)
(72) Erfinder: Schlieben, Joerg, 38100 Braunschweig (DE)
(74) Vertreter: Lederer, Thomas L.

(57) **Zusammenfassung**

Die vorliegende Erfindung betrifft ein Kopplungssystem für eine Kopplung eines Energiespeichers (110) eines Kraftfahrzeugs (100) mit einem Energieversorgungssystem (200), das Kopplungssystem (10) aufweisend eine Hebeeinrichtung (20), einen Stromabnehmer (30), eine Verbindungsleitung (14) und eine Kraftfahrzeugschnittstelle (40), wobei der Stromabnehmer (30) zur energieübertragenden, lösbaren Kopplung mit dem Energieversorgungssystem (200) ausgestaltet ist, wobei die Kraftfahrzeugschnittstelle (40) zur mechanischen Kopplung und zur elektrisch leitenden Kopplung mit dem Kraftfahrzeug (100) ausgestaltet ist, wobei die Verbindungsleitung (14) elektrisch leitend jeweils mit der Kraftfahrzeugschnittstelle (40) und dem Stromabnehmer (30) verbunden ist und wobei die Hebeeinrichtung (20) zum Anheben des Stromabnehmers (30) ausgestaltet ist, wobei die Hebeeinrichtung (20) eine Flugvorrichtung (22) umfasst, wobei die Flugvorrichtung (22) zum aerodynamischen Anheben des Stromabnehmers (30) für die energieübertragende, lösbare Kopplung mit dem Energieversorgungssystem (200) ausgestaltet ist. Ferner betrifft die Erfindung ein Kraftfahrzeug (100), aufweisend einen Energiespeicher (110) und ein Kopplungssystem.

## Beschreibung

Die vorliegende Erfindung betrifft ein Kopplungssystem für eine Kopplung eines Energiespeichers eines Kraftfahrzeugs mit einem Energieversorgungssystem. Ferner betrifft die Erfindung ein Kraftfahrzeug, aufweisend einen Energiespeicher und ein Kopplungssystem.

Der Vorteil des leichten Elektroantriebes in Kraftfahrzeugen wird mit größeren zurückzulegenden Distanzen durch die geringe Energiedichte der Batterien umgekehrt in einen Gewichtsnachteil gegenüber dem schweren Verbrennungsmotor mit sehr leichtem Energieträger.

Gewinne durch Rekuperation stellen auf Langstrecken zumeist keine wesentlichen Energiemengen zur Verfügung. Aus Sicht der aktuellen Versorgungs- und Energiespeichersituation, wäre eine wesentlich höhere Anzahl an Ladestationen gegenüber konventionellen Tankstellen erforderlich, um den höheren Zeitbedarf des Ladevorgangs sowie die höhere Anzahl von Ladevorgängen je Strecke zu kompensieren. Schnellere Ladegeschwindigkeiten erzeugen in einem durch erneuerbare Energien ohnehin labileren Stromnetz zusätzliche kurzzeitige Spitzenlasten. Die geringe Nutzungsdauer von Schnellladestationen, die hohen erforderlichen Investitionen in deren Stromversorgung für beispielsweise den Netzausbau und die Trafostationen, sowie die Kosten und der Ballast großer Batterien im Fahrzeug machen den diskontinuierlichen Prozess der Stromspeicherung für größere Distanzen in Kraftfahrzeugen mit Elektroantrieben zumeist unwirtschaftlich.

Seit 1900 bis heute hat sich der netzstromversorgte E-Antrieb auf allen Eisenbahnhauptstrecken wirtschaftlich durchgesetzt. Entsprechend dem E-Schienenverkehr kann das Reichweiten-Gewichts-Dilemma bei Kraftfahrzeugen mit Elektroantrieben mittels Oberleitungen auf langen und stark frequentierten Stecken für EE-Hybrid-Fahrzeuge mit Batterie- und externer Stromversorgung während der Fahrt gelöst werden. Die Höhe eines Energieversorgungssystems, beispielsweise die Fahrdrahthöhe von Oberleitungssystemen, von ca. 4,5 m ergibt sich aus Sicherheitsabstand, der Höhe des höchsten Fahrzeugs und den genormten Brückenhöhen. Pantographen für die Anbindung an das Energieversorgungssystem müssen bei flachen Fahrzeugen umso höher bauen, was zu sehr ungünstigen Verhältnissen bei Kosten, Gewicht, Abmessungen und Proportionen führt.

Es ist daher Aufgabe der vorliegenden Erfindung, die oben beschriebenen Nachteile im Stand der Technik zumindest teilweise zu beheben. Insbesondere ist es Aufgabe der Erfindung, ein Kopplungssystem für eine Kopplung eines Energiespeichers eines Kraftfahrzeugs mit einem Energieversorgungssystem, sowie ein Kraftfahrzeug mit einem Energiespeicher und einem Kopplungssystem bereitzustellen, insbesondere wobei das Kopplungssystem die Aufladung des Kraftfahrzeugs während der Fahrt, vorzugsweise auf Langstrecken wie Autobahnen, zur Reduzierung oder Entfall erforderlicher Ladevorgänge mit Fahrtunterbrechung durch den Benutzer, zur Vergrößerung des Aktionsradius bei gleichzeitiger Reduzierung des Energiespeichergewichts und/oder zur Stabilisierung des Stromnetzes durch zeitlich und räumlich steuerbare Stromentnahme und ggf. Rückspeisung ermöglicht.

Die voranstehende Aufgabe wird durch die Patentansprüche gelöst. Insbesondere wird die Aufgabe gelöst durch ein Kopplungssystem für eine Kopplung eines Energiespeichers eines Kraftfahrzeugs mit einem Energieversorgungssystem mit den Merkmalen des unabhängigen Anspruchs 1. Ferner wird die Aufgabe gelöst durch ein Kraftfahrzeug mit den Merkmalen des unabhängigen Anspruchs 9. Weitere Vorteile und Details der Erfindung ergeben sich aus den Unteransprüchen, der Beschreibung und den Zeichnungen. Dabei gelten Merkmale, die im Zusammenhang mit dem erfindungsgemäßen Kopplungssystem beschrieben sind, selbstverständlich auch im Zusammenhang mit dem erfindungsgemäßen Kraftfahrzeug und jeweils umgekehrt, sodass bezüglich der Offenbarung zu den einzelnen Erfindungsaspekten stets wechselseitig Bezug genommen wird beziehungsweise werden kann.

Gemäß einem ersten Aspekt der Erfindung wird die Aufgabe gelöst durch ein Kopplungssystem für eine Kopplung eines Energiespeichers eines Kraftfahrzeugs mit einem Energieversorgungssystem, das Kopplungssystem aufweisend eine Hebeeinrichtung, einen Stromabnehmer, eine Verbindungsleitung und eine Kraftfahrzeugschnittstelle, wobei der Stromabnehmer zur energieübertragenden, lösbaren Kopplung mit dem Energieversorgungssystem ausgestaltet ist, wobei die Kraftfahrzeugschnittstelle zur mechanischen Kopplung und zur elektrisch leitenden Kopplung mit dem Kraftfahrzeug ausgestaltet ist, wobei die Verbindungsleitung elektrisch leitend jeweils mit der Kraftfahrzeugschnittstelle und dem Stromabnehmer verbunden ist und wobei die Hebeeinrichtung zum Anheben des Stromabnehmers ausgestaltet ist, wobei die Hebeeinrichtung eine Flugvorrichtung umfasst, wobei die Flugvorrichtung zum aerodynamischen Anheben des Stromabnehmers für die energieübertragende, lösbare Kopplung mit dem Energieversorgungssystem ausgestaltet ist.

Ein Energieversorgungssystem ist im Rahmen der Erfindung insbesondere als ein Oberleitungssystem und/oder als stationäre Overhead Ladestationen zu verstehen.

Die Kraftfahrzeugschnittstelle umfasst wenigstens eine elektrische Anbindung, bevorzugt weist sie zusätzlich eine mechanische Anbindung auf. Die Hebeeinrichtung weist vorzugsweise eine mechanische Verbindung mit der Flugvorrichtung zum Schleppen und Rückführen dieser Hebeeinrichtung zum Kraftfahrzeug auf den Grundkörper auf. Der Stromabnehmer ist über die Verbindungsleitung elektrisch leitend mit der Kraftfahrzeugschnittstelle verbunden und ferner mit dem Energiespeicher eines Kraftfahrzeugs elektrisch leitend verbindbar. Die Verbindungsleitung kann als ein elektrisch leitendes Kabel und/oder als eine elektrisch leitende Struktur ausgestaltet sein. Bevorzugt ist ausschließlich der Stromabnehmer als Hochspannungsbauteil ausgestaltet. Ein bevorzugt mit Kompensation durch Kondensatoren und/oder Supercaps ausgestaltetes Kopplungssystem ermöglicht insbesondere unter Brücken spannungsfreie und damit berührungsschutzfreie Oberleitungen.

Ein erfindungsgemäßes Kopplungssystem ist besonders vorteilhaft durch die Hebeeinrichtung und deren Flugvorrichtung, da die Flugvorrichtung zum aerodynamischen Anheben des Stromabnehmers für die energieübertragende, lösbare Kopplung des Stromabnehmers mit dem Energieversorgungssystem ausgestaltet ist. Das aerodynamische Anheben des Stromabnehmers durch die Flugvorrichtung ist als ein Anheben des Stromabnehmers durch eine Wechselwirkung der Flugvorrichtung mit der Luft und/oder dem Fahrwind eines Kraftfahrzeugs zu verstehen. Ein derart ausgestaltetes Kopplungssystem ermöglicht folglich ein Anheben des Stromabnehmers für die energieübertragende, lösbare Kopplung des Stromabnehmers mit dem Energieversorgungssystem durch eine Wechselwirkung der Flugvorrichtung mit der Luft und/oder dem Fahrwind des Kopplungssystems und/oder eines Kraftfahrzeugs. Bevorzugt ersetzt ein erfindungsgemäßes Kopplungssystem einen von Zügen und elektrisch angetriebenen Lastkraftwagen bekannten mechanischen Pantographen, der den Stromabnehmerbügel durch eine kabelgebundene Flugvorrichtung zur Oberleitung führt. Insbesondere durch Abspulen der Verbindungsleitung kann die Flugvorrichtung vom Kopplungssystem und/oder dem Kraftfahrzeug zu dem Energieversorgungssystem aufsteigen. Somit ermöglicht ein erfindungsgemäßes Kopplungssystem mit einfachen und kostengünstigen Mitteln eine Kopplung eines Energiespeichers eines Kraftfahrzeugs mit einem Energieversorgungssystem, insbesondere wobei das Kopplungssystem die Aufladung des Kraftfahrzeugs während der Fahrt, vorzugsweise auf Langstrecken wie Autobahnen, zur Reduzierung oder Entfall erforderlicher Ladevorgänge mit Fahrtunterbrechung durch den Benutzer, zur Vergrößerung des Aktionsradius bei gleichzeitiger Reduzierung des Energiespeichergewichts und/oder zur Stabilisierung des Stromnetzes durch zeitlich und räumlich steuerbare Stromentnahme und ggf. Rückspeisung ermöglicht.

Gemäß einer bevorzugten Weiterentwicklung der Erfindung kann bei einem erfindungsgemäßen Kopplungssystem vorgesehen sein, dass die Flugvorrichtung wenigstens eine Auftriebsvorrichtung, insbesondere eine angetriebene Auftriebsvorrichtung, für das aerodynamischen Anheben des Stromabnehmers umfasst. Eine Auftriebsvorrichtung, hier im speziellen eine unangetriebene Auftriebsvorrichtung, kann als eine Tragfläche, ein Segel, ein Tragschrauber, Gleit- und/oder Segelflugzeug und/oder als eine anderweitige unangetriebene Auftriebsvorrichtung ausgestaltet sein. Eine angetriebene Auftriebsvorrichtung kann als ein Monocopter, Multicopter, Drohne, Motorflugzeug und/oder anderweitige angetriebene Auftriebsvorrichtung ausgestaltet sein. Der Antrieb der angetriebenen Auftriebsvorrichtung kann elektrisch und/oder mittels Verbrennungsprozess ausgestaltet sein. Bevorzugt wird die angetriebene Antriebsvorrichtung mit elektrischer Energie aus dem Energiespeicher des Kraftfahrzeugs angetrieben. Folglich unterscheiden sich die unangetriebene und angetriebene Auftriebsvorrichtung vorzugsweise durch die Verwendung der Energieressourcen und dem Vorhandensein eines Antriebs in und/oder an der Auftriebsvorrichtung. Das Vorhandensein eines Antriebs in und/oder an der Auftriebsvorrichtung ermöglicht einen angetriebenen Auftrieb beispielsweise auch ohne Fahrtwind. Die unangetriebene Auftriebsvorrichtung ist folglich antriebslos ausgestaltet und ermöglicht das aerodynamische Anheben des Stromabnehmers, vorzugsweise ausschließlich, durch Wechselwirkung von unangetriebenen, insbesondere rotationsfreien und/oder unbeweglichen, Elementen der Auftriebsvorrichtung. Die Steuerung der Auftriebsvorrichtung kann durch das Kopplungssystem und/oder das Kraftfahrzeug erfolgen. Die Steuerung kann mittels einer später beschriebenen Steuereinheit und/oder mittels einer oder mehrerer mechanischer Spannungen durch die eine oder mehrere Verbindungsleitung erfolgen. Eine angetriebene Auftriebsvorrichtung ermöglicht vorteilhaft auch ein Anheben des Stromabnehmers für die energieübertragende, lösbare Kopplung mit dem Energieversorgungssystem ohne Fahrtwind des Kopplungssystems und/oder des Kraftfahrzeugs, beispielsweise im Stand, bei Stau, bei Rückenwind, bei Bremssituationen, in Notsituationen, Sturm und/oder anderen Wind- und/oder Luftsituationen um das Kopplungssystem herum. Ein derart ausgestaltetes Kopplungssystem ermöglicht vorteilhaft eine angetriebene und/oder unangetriebene Kopplung eines Energiespeichers eines Kraftfahrzeugs mit einem Energieversorgungssystem, insbesondere wobei das Kopplungssystem die Aufladung des Kraftfahrzeugs während der Fahrt, vorzugsweise auf Langstrecken wie Autobahnen, zur Reduzierung oder Entfall erforderlicher Ladevorgänge mit Fahrtunterbrechung durch den Benutzer, zur Vergrößerung des Aktionsradius bei gleichzeitiger Reduzierung des Energiespeichergewichts und/oder zur Stabilisierung des Stromnetzes durch zeitlich und räumlich steuerbare Stromentnahme und ggf. Rückspeisung ermöglicht.

Gemäß einer bevorzugten Weiterentwicklung der Erfindung kann bei einem erfindungsgemäßen Kopplungssystem vorgesehen sein, dass die Verbindungsleitung mechanisch mit der Kraftfahrzeugschnittstelle und dem Stromabnehmer und/oder der Hebeeinrichtung verbunden ist.

Zusätzlich zu der elektrisch leitenden Verbindung der Kraftfahrzeugschnittstelle mit dem Stromabnehmer ist eine mechanische Verbindung zwischen der Kraftfahrzeugschnittstelle und dem Stromabnehmer eine vorteilhafte Ausgestaltung des Kopplungssystems. Die mechanische Verbindung ermöglicht eine sichere Anbindung des Stromabnehmers, der Hebeeinrichtung und/oder der Flugvorrichtung an die Kraftfahrzeugschnittstelle, sodass ein Betrieb des Kopplungssystems sichergestellt wird und eine mechanische Überlastung der elektrisch leitenden Verbindung vermieden wird. Die Verbindungsleitung kann bevorzugt die elektrisch leitende Verbindung und die mechanische Verbindung gebündelt in einer Funktionseinheit vereinen oder die elektrisch leitende Verbindung und die mechanische Verbindung können getrennt ausgestaltet sein. Vorzugsweise ist eine mechanische Verbindung stets kürzer als die elektrisch leitende Verbindung ausgestaltet, sodass beispielsweise eine Zugbelastung der Verbindungen im Wesentlichen auf der mechanischen Verbindung lastet.

Gemäß einer bevorzugten Weiterentwicklung der Erfindung kann bei einem erfindungsgemäßen Kopplungssystem vorgesehen sein, dass das Kopplungssystem eine Steuereinheit umfasst, wobei die Steuereinheit zur Steuerung des aerodynamischen Anhebens des Stromabnehmers ausgestaltet ist, insbesondere wobei die Steuerung auf Grundlage von Fahrzeugdaten und/oder Umgebungsdaten erfolgt. Die Steuerung des aerodynamischen Anhebens ermöglicht eine kontrollierte Bewegung und/oder Steuerung der Hebeeinrichtung, insbesondere der Flugvorrichtung. Die Steuerung des aerodynamischen Anhebens kann beispielsweise eine Sicherheitsabschaltung und/oder ein kontrolliertes Landen, insbesondere auf dem Grundkörper und/oder Kraftfahrzeug, und/oder Ankoppeln an das Energieversorgungssystem beispielsweise bei Stillstand ermöglichen. Die Steuerung kann bevorzugt Fahrzeugdaten, Geschwindigkeitsdaten, Streckendaten, Metadaten, ortsbezogene Daten, Wetterdaten, Winddaten und/oder weitere Daten für die Steuerung des aerodynamischen Anhebens der Hebeeinrichtung, insbesondere der Flugvorrichtung, berücksichtigen. Beispielsweise kann ein Anheben der Hebeeinrichtung bei bestimmten Verkehrssituationen, Streckenabschnitten und/oder Geschwindigkeiten verhindert und/oder bevorzugt werden. Eine Steuereinheit kann ferner eine Steuerung der Ladestromentnahme zur Stromnetzstabilisierung über die Routendaten des Navigationssystems des Kraftfahrzeugs durch Laden in Abschnitten mit geringer Stromnetzauslastung ermöglichen.

Gemäß einer bevorzugten Weiterentwicklung der Erfindung kann bei einem erfindungsgemäßen Kopplungssystem vorgesehen sein, dass das Kopplungssystem, insbesondere der Stromabnehmer, eine Haltevorrichtung umfasst, wobei die Haltevorrichtung zur lösbaren Halterung, insbesondere zur magnetischen, lösbaren Halterung, des Stromabnehmers an dem Energieversorgungssystem ausgestaltet ist.

Ein Halten, insbesondere ein magnetisches Halten, des Stromabnehmers an dem Energieversorgungssystem stellt eine besonders bevorzugte Ausgestaltung des erfindungsgemäßen Kopplungssystems dar, da somit beispielsweise kein angetriebenes oder unangetriebenes aerodynamischen Anheben und/oder Anpressen des Stromabnehmers mehr notwendig ist, sobald eine lösbare Halterung zwischen dem Stromabnehmer und dem Energieversorgungssystem erfolgt ist. Insbesondere in zuvor beschriebenen Situationen, wie beispielsweise im Stand, bei Stau, bei Rückenwind, bei Bremssituationen, in Notsituationen, Sturm und/oder anderen Wind- und/oder Luftsituationen um das Kopplungssystem, ist eine lösbare Halterung zwischen dem Stromabnehmer und dem Energieversorgungssystem durch die Haltevorrichtung eine besonders vorteilhafte Weiterentwicklung der Erfindung.

Gemäß einer bevorzugten Weiterentwicklung der Erfindung kann bei einem erfindungsgemäßen Kopplungssystem vorgesehen sein, dass das Kopplungssystem einen Grundkörper aufweist, wobei der Grundkörper lösbar mit einem Kraftfahrzeug koppelbar ausgestaltet ist, insbesondere wobei der Grundkörper zumindest abschnittweise als lösbarer Abschnitt der Verkleidung und/oder einer Strömungsleitvorrichtung des Kraftfahrzeugs ausgestaltet ist. Der Grundkörper kann als ein Gehäuse des Kopplungssystems ausgestaltet sein. Der Grundkörper kann einteilig oder mehrteilig ausgestaltet sein. Beispielhaft kann der Grundkörper in Form eines Dachgepäckträgers und/oder in Form eines Anhängers zur Kopplung mit einem erfindungsgemäßen Kraftfahrzeug ausgestaltet sein. Der Grundkörper ist lösbar mit dem Kraftfahrzeug koppelbar ausgestaltet, um ein teilweises oder vollständiges Entfernen des Kopplungssystems von dem Kraftfahrzeug zu ermöglichen. Ein derart ausgestaltetes Kopplungssystem ermöglicht vorteilhaft beispielsweise eine Reichweitenerweiterung und/oder die Nachrüstbarkeit eines Kraftfahrzeugs mit dem Kopplungssystem. Ebenfalls kann der Grundkörper als eine Strömungsleitvorrichtung, insbesondere als ein Spoiler oder als ein Abschnitt eines Spoilers, des Kraftfahrzeugs ausgestaltet sein und somit in einer mit dem Kraftfahrzeug gekoppelten Position vorteilhaft zusätzlich eine Strömungsleitfunktion für das Kraftfahrzeug ermöglichen.

Gemäß einer bevorzugten Weiterentwicklung der Erfindung kann bei einem erfindungsgemäßen Kopplungssystem vorgesehen sein, dass die Hebeeinrichtung eine Sensoreinheit, insbesondere eine optische Sensoreinheit, zur Erfassung von Umgebungsdaten der Umgebung des Kopplungssystems aufweist. Die Sensoreinheit ist bevorzugt als Kamera ausgestaltet und ermöglicht beispielsweise eine Bilderfassung und Bildübertragung an eine Ausgabeeinheit des Kraftfahrzeugs. Durch die erhöhte Position der Sensoreinheit, insbesondere wenn die Hebeeinrichtung mit dem Energieversorgungssystem gekoppelt ist, wird eine vorteilhafte Übersicht und/oder Fernsicht durch die Sensoreinheit ermöglicht. Die Sensoreinheit kann beispielsweise nach vorne und/oder hinten ausgerichtet sein oder eine 360° Erfassung ermöglichen.

Die Sensoreinheit kann zusätzlich oder alternativ Verkehrsschilder, Verkehrssituation, Verkehrsaufkommen und/oder andere Umgebungsdaten erfassen. Ein derart ausgestaltetes Kopplungssystem ist besonders vorteilhaft, da die Sensoreinheit, insbesondere durch die erhöhte Anordnung, eine Vielzahl an vorteilhaften Umgebungsdaten für einen Anwender und/oder das System des Kraftfahrzeugs bereitstellen kann.

Gemäß einer bevorzugten Weiterentwicklung der Erfindung kann bei einem erfindungsgemäßen Kopplungssystem vorgesehen sein, dass das Kopplungssystem eine Kommunikationsvorrichtung aufweist, wobei die Kommunikationsvorrichtung zum Senden und/oder Empfangen von Daten ausgestaltet ist. Ein erfindungsgemäßes Kopplungssystem ist besonders vorteilhaft, wenn es zum Senden und/oder Empfangen von Daten ausgestaltet ist. Ein derart ausgestaltetes Kopplungssystem ermöglicht eine Kommunikation direkt zwischen Kraftfahrzeugen und/oder zwischen dem Kraftfahrzeug und einer Serverstruktur. Somit ermöglicht das erfindungsgemäße Kopplungssystem gemäß dieser Ausgestaltung beispielweise die Bereitstellung und weitere Auswertung von den Daten des Kopplungssystems. Beispielhaft können Kopplungssysteme direkt miteinander Datenaustauschen und somit auf gering frequentierten Strecken mit beispielsweise nur einem Energieversorgungssystem, insbesondere nur einer Oberleitung, eine Koordination der lösbaren Kopplung der Kopplungssysteme der Kraftfahrzeuge mit dem Energieversorgungssystem koordinieren.

Gemäß einem zweiten Aspekt der Erfindung wird die Aufgabe durch ein Kraftfahrzeug mit einem Energiespeicher und einem Kopplungssystem gelöst, wobei das Kopplungssystem nach dem ersten Aspekt ausgestaltet ist. Bei dem beschriebenen Kraftfahrzeug ergeben sich sämtliche Vorteile, die bereits zu dem Kopplungssystem gemäß dem ersten Aspekt der Erfindung beschrieben worden sind. Somit ermöglicht ein erfindungsgemäßes Kraftfahrzeug mit einfachen und kostengünstigen Mitteln eine Kopplung des Energiespeichers des Kraftfahrzeugs mit einem Energieversorgungssystem, insbesondere wobei das Kopplungssystem die Aufladung des Kraftfahrzeugs während der Fahrt, vorzugsweise auf Langstrecken wie Autobahnen, zur Reduzierung oder Entfall erforderlicher Ladevorgänge mit Fahrtunterbrechung durch den Benutzer, zur Vergrößerung des Aktionsradius bei gleichzeitiger Reduzierung des Energiespeichergewichts und/oder zur Stabilisierung des Stromnetzes durch zeitlich und räumlich steuerbare Stromentnahme und ggf. Rückspeisung ermöglicht.

Gemäß einer bevorzugten Weiterentwicklung der Erfindung kann bei einem erfindungsgemäßen Kraftfahrzeug vorgesehen sein, dass das Kraftfahrzeug eine Rechnereinheit umfasst, wobei die Rechnereinheit zur Bereitstellung von Fahrzeugdaten an das Kopplungssystem, insbesondere an die Steuereinheit des Kopplungssystems, ausgestaltet ist. Die Rechnereinheit kann bevorzugt Fahrzeugdaten, Geschwindigkeitsdaten, Streckendaten, Metadaten, ortsbezogene Daten, Wetterdaten, Winddaten und/oder weitere Daten für die Steuerung des aerodynamischen Anhebens der Hebeeinrichtung, insbesondere der Flugvorrichtung, berücksichtigen und/oder an die Steuereinheit des Kopplungssystems übermitteln. Beispielsweise kann ein Anheben der Hebeeinrichtung bei bestimmten Verkehrssituationen, Streckenabschnitten und/oder Geschwindigkeiten verhindert und/oder bevorzugt werden. Eine Rechnereinheit kann ferner zusätzlich oder alternativ zu der Steuereinheit des Kopplungssystems eine Steuerung der Ladestromentnahme zur Stromnetzstabilisierung über die Routendaten des Navigationssystems des Kraftfahrzeugs durch Laden in Abschnitten mit geringer Stromnetzauslastung ermöglichen. Zusätzlich oder alternativ kann die Rechnereinheit eine Regelungstechnik für das aerodynamische Anheben der Hebevorrichtung ermöglichen, um eine kontrollierte Bewegung und/oder Steuerung der Hebeeinrichtung, insbesondere der Flugvorrichtung, für die lösbare Kopplung mit dem Energieversorgungssystem zu ermöglichen.

Ein erfindungsgemäßes Kopplungssystem sowie ein erfindungsgemäßes Kraftfahrzeug werden nachfolgend anhand von Zeichnungen näher erläutert. Es zeigen jeweils schematisch:
- Figur 1: in einer Seitenansicht ein Kopplungssystem, ein Energieversorgungssystem und ein Kraftfahrzeug mit einem Speichermodul,
- Figur 2: in einer perspektivischen Ansicht ein Kopplungssystem mit angetriebenen Auftriebsvorrichtungen und ein Energieversorgungssystem, und
- Figur 3: in einer perspektivischen Ansicht ein Kopplungssystem mit einer unangetriebenen Auftriebsvorrichtung und ein Energieversorgungssystem.

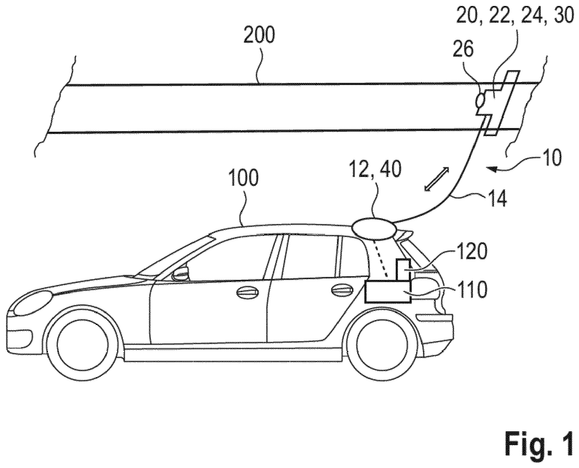

Elemente mit gleicher Funktion und Wirkungsweise sind in den Fig. 1 bis 3 jeweils mit denselben Bezugszeichen versehen.

In Fig. 1 ist schematisch in einer Seitenansicht ein Kopplungssystem 10, ein Energieversorgungssystem 200 und ein Kraftfahrzeug 100 mit einem Energiespeicher 110 und einer Rechnereinheit 120 gezeigt. Das Kopplungssystem 10 ist in einem Zustand der lösbaren Kopplung mit dem Energieversorgungssystem 200 dargestellt. Die Hebeeinrichtung 20, die Flugvorrichtung 22 und die Auftriebsvorrichtung 24 sind von dem Kraftfahrzeug 100 distanziert und im Bereich des Energieversorgungssystems 200 angeordnet, um eine lösbare Kopplung der Stromabnehmer 30 des Kopplungssystems 10 mit dem Energieversorgungssystem 200 zu ermöglichen. Die Stromabnehmer 30 sind mit der Kraftfahrzeugschnittstelle 40 über die Verbindungsleitung 14 elektrisch leitend verbunden. Das Kopplungssystem 10 weist ferner eine Sensoreinheit 26 zur Erfassung von Umgebungsdaten der Kopplungssystem 10 auf. Das erfindungsgemäße Kopplungssystem 10 ist besonders vorteilhaft durch die Hebeeinrichtung 20 und deren Flugvorrichtung 22, da die Flugvorrichtung 22 zum aerodynamischen Anheben des Stromabnehmers 30 für die energieübertragende, lösbare Kopplung des Stromabnehmers 30 mit dem Energieversorgungssystem 200 ausgestaltet ist. Das aerodynamische Anheben des Stromabnehmers 30 durch die Flugvorrichtung 22 ist als ein Anheben des Stromabnehmer 30 durch eine Wechselwirkung der Flugvorrichtung 22 mit der Luft und/oder dem Fahrwind des Kraftfahrzeugs 100 zu verstehen. Das derart ausgestaltete Kopplungssystem 10 ermöglicht folglich ein Anheben des Stromabnehmers 30 für die energieübertragende, lösbare Kopplung des Stromabnehmers 30 mit dem Energieversorgungssystem 200 durch eine Wechselwirkung der Flugvorrichtung 22 mit der Luft und/oder dem Fahrwind des Kopplungssystems 10 und/oder eines Kraftfahrzeugs 100. Insbesondere durch Abspulen der Verbindungsleitung 14 kann die Flugvorrichtung 22 von Grundkörper 12 des Kopplungssystems 10 an dem Kraftfahrzeug 100 zu dem Energieversorgungssystem 200 aufsteigen. Somit ermöglicht ein erfindungsgemäßes Kopplungssystem 10 mit einfachen und kostengünstigen Mitteln eine Kopplung eines Energiespeichers 110 des Kraftfahrzeugs 100 mit einem Energieversorgungssystem 200, insbesondere wobei das Kopplungssystem 10 die Aufladung des Kraftfahrzeugs 100 während der Fahrt, vorzugsweise auf Langstrecken wie Autobahnen, zur Reduzierung oder Entfall erforderlicher Ladevorgänge mit Fahrtunterbrechung durch den Benutzer, zur Vergrößerung des Aktionsradius bei gleichzeitiger Reduzierung des Energiespeichergewichts und/oder zur Stabilisierung des Stromnetzes durch zeitlich und räumlich steuerbare Stromentnahme und ggf. Rückspeisung ermöglicht.

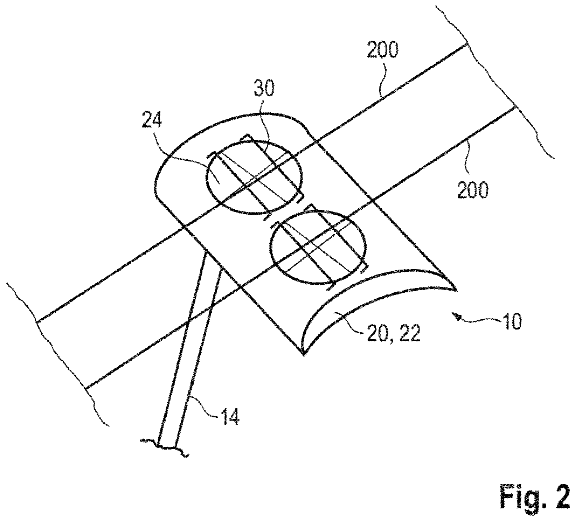

In Fig. 2 ist schematisch in einer perspektivischen Ansicht ein Kopplungssystem 10 mit angetriebenen Auftriebsvorrichtungen 24 und ein Energieversorgungssystem 200 gezeigt. Die Flugvorrichtung 22 ist beispielhaft als Multicopter mit zwei angetriebenen Auftriebsvorrichtungen 24 ausgestaltet. Der Antrieb der angetriebenen Auftriebsvorrichtung 24 wird elektrisch mit elektrischer Energie aus dem Energiespeicher 110 (nicht gezeigt) des Kraftfahrzeugs 100 (nicht gezeigt) angetrieben. Die Stromabnehmer 30 sind als Bügelkonstruktion oberhalb der Auftriebsvorrichtungen 24 ausgestaltet. Die Steuerung der Auftriebsvorrichtung 24 kann durch das Kopplungssystem 10 und/oder das Kraftfahrzeug 100 (nicht gezeigt) erfolgen. Eine angetriebene Auftriebsvorrichtung 24 ermöglicht vorteilhaft auch ein Anheben des Stromabnehmers 30 für die energieübertragende, lösbare Kopplung mit dem Energieversorgungssystem 200 ohne Fahrtwind des Kopplungssystems 10 und/oder des Kraftfahrzeugs 100 (nicht gezeigt), beispielsweise im Stand, bei Stau, bei Rückenwind, bei Bremssituationen, in Notsituationen, Sturm und/oder anderen Wind- und/oder Luftsituationen um das Kopplungssystem 10 herum. Ein derart ausgestaltetes Kopplungssystem 10 ermöglicht vorteilhaft eine angetriebene Kopplung eines Energiespeichers 110 eines Kraftfahrzeugs 100 mit einem Energieversorgungssystem 200, insbesondere wobei das Kopplungssystem 10 die Aufladung des Kraftfahrzeugs 100 während der Fahrt, vorzugsweise auf Langstrecken wie Autobahnen, zur Reduzierung oder Entfall erforderlicher Ladevorgänge mit Fahrtunterbrechung durch den Benutzer, zur Vergrößerung des Aktionsradius bei gleichzeitiger Reduzierung des Energiespeichergewichts und/oder zur Stabilisierung des Stromnetzes durch zeitlich und räumlich steuerbare Stromentnahme und ggf. Rückspeisung ermöglicht.

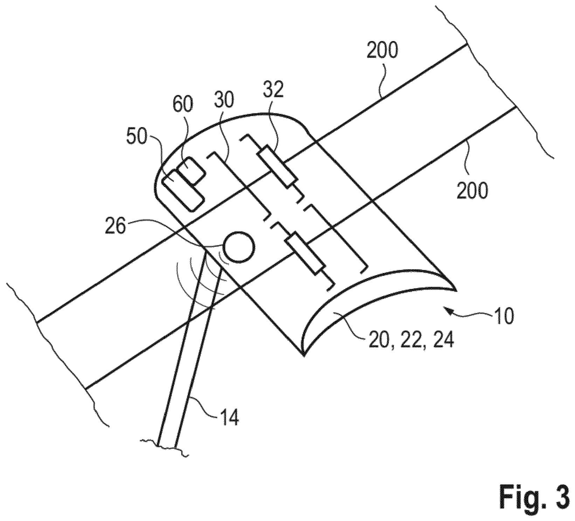

In Fig. 3 ist schematisch in einer perspektivischen Ansicht ein Kopplungssystem 10 mit einer unangetriebenen Auftriebsvorrichtung 24 und ein Energieversorgungssystem 200 gezeigt. Die Hebeeinrichtung 20 ist mit einer Flugvorrichtung 22 mit einer unangetriebenen Auftriebsvorrichtung 24 ausgestaltet. Eine unangetriebene Auftriebsvorrichtung 24 ermöglicht das aerodynamische Anheben des Stromabnehmers 30, vorzugsweise ausschließlich, durch Wechselwirkung von unangetriebenen, insbesondere rotationsfreien und/oder unbeweglichen, Elementen der Auftriebsvorrichtung 24. Die Auftriebsvorrichtung 24 ist beispielhaft als eine Tragfläche und/oder ein Segel ausgestaltet. Das Kopplungssystem 10 weist an der Hebeeinrichtung 20 eine Sensoreinheit 26 auf. Die Sensoreinheit 26 ist als Kamera ausgestaltet und ermöglicht beispielsweise eine Bilderfassung und Bildübertragung an eine Ausgabeeinheit des Kraftfahrzeugs 100 (nicht gezeigt). Durch die erhöhte Position der Sensoreinheit 26, insbesondere wenn die Hebeeinrichtung 20 mit dem Energieversorgungssystem 200 gekoppelt ist, wird eine vorteilhafte Übersicht und/oder Fernsicht durch die Sensoreinheit 26 ermöglicht. Ein derart ausgestaltetes Kopplungssystem 10 ist besonders vorteilhaft, da die Sensoreinheit 26, insbesondere durch die erhöhte Anordnung, eine Vielzahl an vorteilhaften Umgebungsdaten für einen Anwender und/oder das System des Kraftfahrzeugs 100 (nicht gezeigt) bereitstellt. Das Kopplungssystem 10 umfasst ferner an der Flugvorrichtung 22 eine Steuereinheit 50 und eine Kommunikationsvorrichtung 60, wobei die Steuereinheit 50 zur Steuerung des aerodynamischen Anhebens des Stromabnehmers 30 ausgestaltet ist, insbesondere wobei die Steuerung auf Grundlage von Fahrzeugdaten und/oder Umgebungsdaten der Sensoreinheit 26 erfolgt. Die Kommunikationsvorrichtung 60 ist zum Senden und/oder Empfangen von Daten ausgestaltet ist. Ein erfindungsgemäßen Kopplungssystem 10 ist besonders vorteilhaft, wenn es zum Senden und/oder Empfangen von Daten ausgestaltet ist. Ein derart ausgestaltetes Kopplungssystem 10 ermöglicht eine Kommunikation direkt zwischen Kraftfahrzeugen 100 (nicht gezeigt) und/oder zwischen dem Kraftfahrzeug 100 (nicht gezeigt) und einer Serverstruktur. Die Stromabnehmer 30 des gezeigten Kopplungssystems 10 weisen Haltevorrichtungen 32 auf.

Die Haltevorrichtungen 32 sind zur lösbaren Halterung, insbesondere zur magnetischen, lösbaren Halterung, des Stromabnehmers 30 an dem Energieversorgungssystem 200 ausgestaltet. Ein Halten, insbesondere ein magnetisches Halten, des Stromabnehmers 30 an dem Energieversorgungssystem 200 stellt eine besonders bevorzugte Ausgestaltung des erfindungsgemäßen Kopplungssystems 10 dar, da somit beispielsweise kein angetriebenes oder unangetriebenes aerodynamischen Anheben des Stromabnehmers 30 mehr notwendig ist, sobald eine lösbare Halterung zwischen dem Stromabnehmer 30 und dem Energieversorgungssystem 200 erfolgt ist. Insbesondere in zuvor beschriebenen Situationen, wie beispielsweise im Stand, bei Stau, bei Rückenwind, bei Bremssituationen, in Notsituationen, Sturm und/oder anderen Wind- und/oder Luftsituationen um das Kopplungssystem 10, ist eine lösbare Halterung zwischen dem Stromabnehmer 30 und dem Energieversorgungssystem 200 durch die Haltevorrichtung 32 eine besonders vorteilhafte Weiterentwicklung der Erfindung.

### Bezugszeichenliste

- 10: Kopplungssystem
- 12: Grundkörper
- 14: Verbindungsleitung

- 20: Hebeeinrichtung
- 22: Flugvorrichtung
- 24: Auftriebsvorrichtung
- 26: Sensoreinheit

- 30: Stromabnehmer
- 32: Haltevorrichtung

- 40: Kraftfahrzeugschnittstelle

- 50: Steuereinheit

- 60: Kommunikationsvorrichtung

- 100: Kraftfahrzeug
- 110: Energiespeicher
- 120: Rechnereinheit

- 200: Energieversorgungssystem

## Patentansprüche

1. Kopplungssystem (10) für eine Kopplung eines Energiespeichers (110) eines Kraftfahrzeugs (100) mit einem Energieversorgungssystem (200), das Kopplungssystem (10) aufweisend eine Hebeeinrichtung (20), einen Stromabnehmer (30), eine Verbindungsleitung (14) und eine Kraftfahrzeugschnittstelle (40), wobei der Stromabnehmer (30) zur energieübertragenden, lösbaren Kopplung mit dem Energieversorgungssystem (200) ausgestaltet ist, wobei die Kraftfahrzeugschnittstelle (40) zur mechanischen Kopplung und zur elektrisch leitenden Kopplung mit dem Kraftfahrzeug (100) ausgestaltet ist, wobei die Verbindungsleitung (14) elektrisch leitend jeweils mit der Kraftfahrzeugschnittstelle (40) und dem Stromabnehmer (30) verbunden ist und wobei die Hebeeinrichtung (20) zum Anheben des Stromabnehmers (30) ausgestaltet ist,
**dadurch gekennzeichnet,**
**dass** die Hebeeinrichtung (20) eine Flugvorrichtung (22) umfasst, wobei die Flugvorrichtung (22) zum aerodynamischen Anheben des Stromabnehmers (30) für die energieübertragende, lösbare Kopplung mit dem Energieversorgungssystem (200) ausgestaltet ist, wobei die Flugvorrichtung (22) wenigstens eine unangetriebene Auftriebsvorrichtung (24) für das aerodynamischen Anheben des Stromabnehmers (30) umfasst.

2. Kopplungssystem (10) nach Anspruch 1,
**dadurch gekennzeichnet,**
**dass** die Flugvorrichtung (22) wenigstens eine angetriebene Auftriebsvorrichtung (24) für das aerodynamischen Anheben des Stromabnehmers (30) umfasst.

3. Kopplungssystem (10) nach einem der vorangehenden Ansprüche,
**dadurch gekennzeichnet,**
**dass** die Verbindungsleitung (14) mechanisch mit der Kraftfahrzeugschnittstelle (40) und dem Stromabnehmer (30) und/oder der Hebeeinrichtung (20) verbunden ist.

4. Kopplungssystem (10) nach einem der vorangehenden Ansprüche,
**dadurch gekennzeichnet,**
**dass** das Kopplungssystem (10) eine Steuereinheit (50) umfasst, wobei die Steuereinheit (50) zur Steuerung des aerodynamischen Anhebens des Stromabnehmers (30) ausgestaltet ist, insbesondere wobei die Steuerung auf Grundlage von Fahrzeugdaten und/oder Umgebungsdaten erfolgt.

5. Kopplungssystem (10) nach einem der vorangehenden Ansprüche,
**dadurch gekennzeichnet,**
**dass** das Kopplungssystem (10), insbesondere der Stromabnehmer (30), eine Haltevorrichtung (32) umfasst, wobei die Haltevorrichtung (32) zur lösbaren Halterung, insbesondere zur magnetischen, lösbaren Halterung, des Stromabnehmers (30) an dem Energieversorgungssystem (200) ausgestaltet ist.

6. Kopplungssystem (10) nach einem der vorangehenden Ansprüche,
**dadurch gekennzeichnet,**
**dass** das Kopplungssystem (10) einen Grundkörper (12) aufweist, wobei der Grundkörper (12) lösbar mit einem Kraftfahrzeug (100) koppelbar ausgestaltet ist, insbesondere wobei der Grundkörper (12) zumindest abschnittweise als lösbarer Abschnitt der Verkleidung und/oder einer Strömungsleitvorrichtung des Kraftfahrzeugs (100) ausgestaltet ist.

7. Kopplungssystem (10) nach einem der vorangehenden Ansprüche,
**dadurch gekennzeichnet,**
**dass** die Hebeeinrichtung (20) eine Sensoreinheit (26), insbesondere eine optische Sensoreinheit (26), zur Erfassung von Umgebungsdaten der Umgebung des Kopplungssystems (10) aufweist.-

8. Kopplungssystem (10) nach einem der vorangehenden Ansprüche,
**dadurch gekennzeichnet,**
**dass** das Kopplungssystem (10) eine Kommunikationsvorrichtung (60) aufweist, wobei die Kommunikationsvorrichtung (60) zum Senden und/oder Empfangen von Daten ausgestaltet ist.

9. Kraftfahrzeug (100), aufweisend einen Energiespeicher (110) und ein Kopplungssystem (10),
**dadurch gekennzeichnet,**
**dass** das Kopplungssystem (10) nach einem der vorangehenden Ansprüche ausgestaltet ist.

10. Kraftfahrzeug (100) nach Anspruch 9,
**dadurch gekennzeichnet,**
**dass** das Kraftfahrzeug (100) eine Rechnereinheit (120) umfasst, wobei die Rechnereinheit (120) zur Bereitstellung von Fahrzeugdaten an das Kopplungssystems (10), insbesondere an die Steuereinheit (50) des Kopplungssystems (10), ausgestaltet ist.
